# EUROPEAN PATENT SPECIFICATION

(11) **EP 0 406 466 B1**
(45) Date of publication and mention of the grant of the patent: **15.12.1993**
(21) Application number: 89112288.9
(22) Date of filing: 05.07.1989
(51) Int. Cl.: H01M 10/04, H01M 2/20

(54) **Storage battery**
Stromakkumulator
Accumulateur

(43) Date of publication of application: 09.01.1991
(73) Proprietor: NESTE OY, FIN-02150 Espoo (FI)
(72) Inventor: Kärnä, Toivo, SF-06400 Porvoo (FI); Nieminen, Jukka-Pekka, SF-06400 Porvoo (FI); Mäisti, Asko, SF-06100 Porvoo (FI); Kemppi, Ahti, SF-16600 Järvelä (FI); Savolainen, Esko, SF-15880 Hollola 3 (FI)
(74) Representative: Tiedtke, Harro, Dipl.-Ing.

(56) References cited:
- FR-A- 2 118 610
- GB-A- 185 946
- GB-A- 1 221 779
- GB-A- 2 041 632
- US-A- 4 746 585

## Description

The present invention concerns a storage battery comprising a plurality of cells enclosed within a housing, each cell containing electrolyte and plates coated with positive or negative active mass and separated by separator plates, and the requisite electrical connectors interconnecting the plates and/or cells.

Conventional storage batteries made from lead are in general composed of plates enclosed within a cell and immersed in electrolyte, provided in which is a conducting part conveying the current, a plate frame produced from lead or lead alloy, and active mass which in general is pasted in the plate frames. The sides of the plate frames are provided with lugs at which they are soldered to leaden current rails, which in turn are soldered to one another through the partitions of the cells. When discharging the storage battery at high currents, the resistance of the plate frames limits the operation of the storage battery in that the active mass only in the vicinity of the plate lugs is efficiently used. For securing the current flow, excessive quantitites of lead have to be placed in the plate frames, which raises the weight of a storage battery. In addition, storage battery housings are used in conventional storage batteries in which the partitions between the cells are provided for use. Not very many conductors can be transmitted through said partitions to conduct current from one cell to another. A deep storage battery housing with the partitions is in itself an expensive plastic part which is difficult to produce.

Also storage battery designs deviating from the conventional one, in which part of the electrodes have been constructed to be bipolar. The positive and negative active masses of the adjacent cells have been pasted on the same plate frame, which at the centre point has been engaged to a plastic frame in conjunction with injection moulding. The plastic frames have been soldered to one another with ultrasonic wave so that the partitions of the cells and at the same time, the entire storage battery become well sealed. An advantage of said storage battery is small internal resistance and uniform use of active material, which is a consequence of the contact from one cell to another, said contact being distributed uniformly in the area of the entire partition of said cell. One drawback is a very great number of joints to be made by soldering, which increases the productions costs of said storage battery.

Known in the art are also the so-called recombination storage batteries (see e.g. EP 01 07 976) in which the plates containing the positive and negative active mass of the adjacent cells have been connected with bridging pieces. Said bridging pieces may, in fact, be composed of projections connecting plate parts belonging to adjacent cells. In the present storage battery, between the plate stacks constituting the adjacent cells there are no sealed partitions but merely an air gap. The structure is feasible only in the instance in which the electrolyte has been absorbed into the separator plates and active masses. A drawback are, for instance, the leakage flows on the surface of the conductors along the electrolyte diaphragm, said disadvantage being the greater, the broader the connecting pieces between the plates are. Also the flow distribution is partly uneven because all that flows must pass through the above projections.

In the preamble of claim 1, it is proceeded from a storage battery as is shown in the printed publication FR-A-2 118 610. This reference discloses a bipolar battery, in which rod-shaped members used instead of storage battery plates are placed within a plurality of individual cells. The rod-shaped members, for example in this reference designated as electrodes, are alternately charged negatively and positively within such a cell, with respectively two differently charged electrodes being formed with each other as one piece from two opposing cells. Accordingly, this construction fixes the number of individual cells and thus the power output of the storage battery.

The object of the present invention is to provide a storage battery enabling the simplification of plate stacking.

According to the invention, this problem is solved by the features in the characterizing part of claim 1. According to this main claim, the ends of the plates emerge from the housing of the cells, and the spaces between the cells and the end walls of the outer cells have been provided with an electricity-conducting joint so as to be electricity-conductive.

With the storage battery of the invention, numerous remarkable advantages are achieved. As taught by the invention, each voltage step in the storage battery of the invention is packed within an electricity insulating housing of its own, whereby only the conductors enter through the walls of the housing. Conductivity as well as the voltage between the terminals is so provided that the space between said boxes is filled with an electricity conducting mass such as a solution or metal or in an equivalent way. The design of the invention enables the essential elongation and simpler stacking of the manufacture series of the storage battery cells.

In addition, in the design of the invention the mass formation of said plates is considerably simpler. Since in the storage battery of the invention, the plates of the same signs and placed in the same cell have been interconnected, in the design of the invention also the differential voltages between the plates of the same sign become compensated thus differing from the conventional bipolar storage battery disclosed e.g. in the European Patent Application No. 87 900 155.0

The GB-A-2 041 632, which shows another storage battery of that kind, describes additional conductive bars, which serve to provide the required electrical connections within and between the cells and which support the cells, so that they extend in parallel, spaced relationship. Herefor, the conductive bars pass straight as unbroken continuous members through both end walls of adjacent cells, and are electrically connected with the plates respectively charged positively or negatively.

A conventional lead storage battery described in the GB-A-1 221 779 has a 6-cell monobloc container with a plurality of slots on its top edge. Each of these cells serves to receive a number of plates the respective ends of which are connected by lead casting within the slots. Thus, this reference follows the solution principle to form the individual cells already in one piece with the battery housing and to electrically connect the electrode plates by lines subsequently cast in the provided slots.

The invention is described in detail referring to an advantageous embodiment of the invention depicted in the figures of the drawing attached, whereto the invention is not however intended to be exclusively confined.

Fig. 1 presents the cells of the invention packed in their housing in schematical top view.

Fig. 2 presents the completed storage battery composed of the cells of the invention in schematical top view.

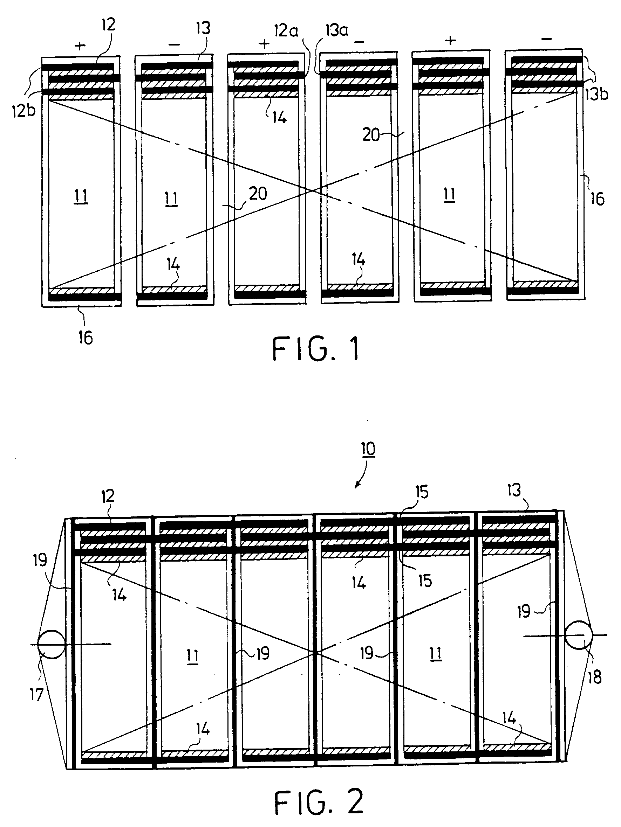

In the embodiment of Figs 1 and 2, the storage battery of the invention is in general indicated with reference numeral 10. In Figs 1 and 2 is presented a 12V storage battery composed of six cells 11. As taught by the basic idea of the invention, each cell 11 has been packed in an individual electricity insulating housing, and No. 16 so that each cell 11 includes plates 12 coated with positive active mass and plates 13 coated with negative active mass. Only the ends 12a and 13a of the plates 12 and 13 to be interconnected electrically, respectively, the ends 12b and 13b of the plates 12 and 13 to be connected to the terminals 17 and 18 emerge through the wall of the housing 16.

The spaces 20 between the cells 11 are advantageously filled with an electricity conducting mass, such as with a solution or metal, or other electricity conducting material. Hereby, the ends 12a and 13a of the ends 12 and 13 are interconnected electrically, whereby plates 15 corresponding to conventional bipolar plates are formed. Respectively, the ends 12b of the plates 12 are connected electrically to the positive terminal 17 and the ends 13b of the plates 13 to the negative terminal 18. As is best seen in Fig. 2, the end walls of the outer cells 11 have been provided to be electricity conductive. In Fig. 2, the electricity conducting joint is indicated by reference numeral 19.

It is obvious that the invention is in no way critical in respect to the production manner of the electricity conducting joint 19.

In the foregoing is presented only the principal design of the invention, and it is obvious to a person skilled in the art that numerous modifications may be accomplished therein within the scope of the inventive idea presented in the claims below.

The present invention concerns a storage battery (10) comprising several cells (11) enclosed within a housing, each cell containing electrolyte and plates (12,13,15) separated from each other with separator plates (14) and coated with positive or negative active mass, and the requisite electricity conducting connectors connecting the plates and/or cells. Each cell (11) contains positive and negative plates (12,13,15). Each cell (11) has been packed in an individual electricity insulating housing (16) so that merely the ends (12a,13a) of the plates (12,13) to be electrically interconnected, respectively the ends (12b,13b) of the plates (12,13) to be connected to the terminals (17,18) emerge from the housing (16) to be electrically connected. For providing electricity conductivity, the spaces between the cells (11) and the end walls of the outer cells (11) have been provided to be electricity conductive with an electricity conducting joint (19).

## Claims

1. A storage battery (10), comprising several cells (11) enclosed in a housing, each cell (11) containing electrolyte and plates (12, 13, 15) separated from each other with separator plates (14) and coated with positive or negative active mass, and the requisite, electricity conducting connectors connecting the plates and/or cells, each cell (11) containing positive and negative plates (12, 13, 15), **characterized in that** each cell (11) is so packed into an individual electricity insulating housing (16) that only the ends (12a, 13a) of the plates (12, 13) to be electrically interconnected, respectively, the ends (12b, 13b) of the plates (12, 13) to be connected to the terminals (17, 18) emerge from the housing (16) to be electrically connected, and that, for providing electricity conductivity, the spaces (20) between the cells (11) and the end walls of the outer cells (11) have been provided to be electricity conductive with an electricity conducting joint (19).

2. Storage battery according to claim 1, characterized in that the electricity conducting joint (19) has been provided with an electricity conducting mass, such as a solution.

3. Storage battery according to claim 1, characterized in that the electricity conducting joint (19) has been provided with a metal.

## Patentansprüche

1. Stromakkumulator (10) mit mehreren, in einem Gehäuse eingeschlossenen Zellen (11), wobei jede Zelle Füllsäure und Platten (12, 13, 15) beihaltet, die voneinander durch Trennplatten (14) getrennt und mit positiver oder negativer Masse beschichtet sind, und die erforderlichen, elektrisch leitenden Verbindungselemente die Platten und/oder die Zellen verbinden, wobei jede Zelle (11) positive und negative Platten (12, 13, 15) hat, dadurch gekennzeichnet, daß
jede Zelle (11) so in ein einzelnes, elektrisch isolierendes Gehäuse (16) eingebettet ist, daß nur die elektrisch miteinander zu verbindenden Enden (12a, 13a) der Platten (12, 13), bzw. die mit den Polen (17, 18) zu verbindenden Enden (12b, 13b) der Platten (12, 13) aus dem elektrisch zu verbindenden Gehäuse (16) hervortreten, und daß
zur Schaffung von elektrischer Leitfähigkeit die Räume (20) zwischen den Zellen (11) und den Abschlußwänden der äußeren Zellen (11) elektrisch leitfähig mit einer elektrisch leitenden Verbindung (19) versehen sind.

2. Stromakkumulator nach Patentanspruch 1, dadurch gekennzeichnet, daß die elektrisch leitende Verbindung (19) durch eine elektrisch leitende Masse, wie eine Lösung, geschaffen ist.

3. Stromakkumulator nach Patentanspruch 1, dadurch gekennzeichnet, daß die elektrisch leitende Verbindung (19) durch ein Metall geschaffen ist.

## Revendications

1. Accumulateur (10) comprenant plusieurs cellules (11) disposées dans un boîtier, chaque cellule (11) contenant un électrolyte et des plaques (12, 13, 15) séparées les unes des autres par des plaques séparatrices (14) et revêtues d'une masse active positive ou négative, et les connecteurs électriquement conducteurs nécessaires reliant les plaques et/ou les cellules, chaque cellule (11) contenant des plaques positives et négatives (12, 13, 15), caractérisé en ce que chaque cellule (11) est placée dans un boîtier individuel électriquement isolant (16) de manière que seules les extrémités (12a, 13a) des plaques (12, 13) qui doivent être électriquement interconnectées, et respectivement les extrémités (12b, 13b) des plaques (12, 13) qui doivent être reliées aux bornes (17, 18), fassent saillie du boîtier (16) pour être électriquement connectées, et en ce que, pour établir la conductivité de l'électricité, les espaces (20) entre les cellules (11) et les parois d'extrémité des cellules externes (11) sont constitués de manière à être électriquement conducteurs au moyen d'un joint électriquement conducteur (19).

2. Accumulateur selon la revendication 1, caractérisé en ce que le joint électriquement conducteur (19) comporte une masse électriquement conductrice, telle qu'une solution.

3. Accumulateur selon la revendication 1, caractérisé en ce que le joint électriquement conducteur (13) comporte un métal.
